# EUROPEAN PATENT SPECIFICATION

(11) **EP 2 543 171 B1**
(45) Date of publication and mention of the grant of the patent: **20.08.2014**
(21) Application number: 11715295.9
(22) Date of filing: 02.03.2011
(51) Int. Cl.: H04N 21/433, H04N 21/6371, H04N 21/643, H04N 21/647, H04L 29/06, H04N 21/6408, H04N 21/6587

(54) **NETWORK TIME-SHIFT METHODS AND APPARATUS**
NETZWERKBASIERTE ZEITVERSCHIEBUNGSVERFAHREN UND -VORRICHTUNGEN
PROCÉDÉS ET DISPOSITIFS DE DÉCALAGE TEMPOREL D'UN RÉSAU

(30) Priority: 04.03.2010 US 310546 P; 28.02.2011 US 201161036932 P
(43) Date of publication of application: 09.01.2013
(73) Proprietor: Telefonaktiebolaget LM Ericsson (publ), 164 83 Stockholm (SE)
(72) Inventor: LINDQUIST, Jan Erik, SE-12535 Älvsjö (SE); LINDSTRÖM, Mats, SE-18245 Enebyberg (SE); CARNEBRINK, Torbjörn, SE-18754 Täby (SE); BLUMENBERG, Johan, SE-12055 Årsta (SE)
(74) Representative: Barrett, Peter Andrew John
(86) International application number: PCT/SE2011/050234
(87) International publication number: WO 2011/108983

(56) References cited:
- "Timestamp Marking for Time Shift on a networked PVR", IP.COM JOURNAL, IP.COM INC., WEST HENRIETTA, NY, US, 20 August 2007 (2007-08-20), XP013121506, ISSN: 1533-0001

## Description

### TECHNICAL FIELD

This application relates to internet broadcast television (TV).

### BACKGROUND

Internet Protocol Television (IPTV) offers opportunities for wireline telecom service providers to attract new customers to their networks. With IPTV, telecom service providers can compete with TV offerings from cable operators, satellite-TV operators, and other terrestrial service providers. IPTV also helps providers retain existing customers and prevent churn by introducing a bundled offering of Internet, voice, and IPTV services (so-called "triple play").

IPTV uses web-browser technology to enable IPTV Service Providers to provide media services deployed in communication networks, such as wired and wireless telephone networks. Common web browser applications, such as Mozilla's Firefox and Microsoft's Internet Explorer, enable users to view specific Internet pages and other file locations accessible by the browser. Each such page is typically identified by a Uniform Resource Identifier (URI) or similar page address.

In general, IPTV is a system for receiving and displaying multimedia streams encoded as series of IP data packets. In an IPTV system, a user IPTV device can be a set-top box (STB) or a TV having integrated STB capabilities. Such a user equipment (UE) can be configured to access IPTV services, e.g., via an IP Multimedia System (IMS) of a communication network. An IPTV system and media bookmarks for such a system are described in for example International Publication WO 2010/016836 by N. Mitra et al.

Work on IPTV is underway in several contexts, including for example the Open IPTV Forum (OIPF), which is specifying an end-to-end platform for supplying multimedia and IPTV services to UEs over the Internet and managed networks having controlled quality-of-service (QoS) performance. A version 2.0 specification of a functional IPTV architecture is available at www.openiptvforum.org, and the architecture uses the IMS that is specified by the Third Generation Partnership Project (3GPP). A UE can access services offered through an IMS in many ways, both wired (e.g., Ethernet, cable modem, digital subscriber line, etc.) and wireless (e.g., 3GPP-specified cellular radio, IEEE 802.11, IEEE 802.16, etc.). Volume 4 of the Release 1 OIPF specification specifies the messaging protocols, and is available at www.oipf.org/specifications.html.

Besides the OIPF, the European Telecommunications Standards Institute (ETSI) and its Telecommunications and Internet converged Services and Protocols for Advanced Networking (TISPAN) and other standard-setting organizations have adopted the IMS network architecture in order to ensure the QoS. TISPAN specifications are available at www.etsi.org/tispan/, and ETSI TS 183 063 v2.0.2 is the TISPAN IMS-based IPTV Stage 3 specification.

The IMS is specified in 3GPP Technical Specification (TS) 23.228 V8.4.0, IP Multimedia Subsystem (IMS) Stage 2 (Release 8), March 2008, and other versions of TS 23.228. IMS is described in, for example, R. Noldus et al., "Multi-Access for the IMS Network", Ericsson Review No. 2, pp. 81-86 (2008); U. Olsson et al., "Communication Services - The Key to IMS Service Growth", Ericsson Review No. 1, pp. 8-13 (2008); and P. Arberg et al., "Network Infrastructure for IPTV", Ericsson Review No. 3, pp. 79-83 (2007). Approaches to IMS-based IPTV are described in M. Cedervall et al., "Open IPTV Forum - Toward an Open IPTV Standard", Ericsson Review No. 3, pp. 74-78 (2007), and T. Cagenius et al., "Evolving the TV experience: Anytime, Anywhere, Any Device", Ericsson Review No. 3, pp. 107-111 (2006).

The IMS in 3GPP networks uses the Session Initiation Protocol (SIP) and the Session Description Protocol (SDP) as its basic signaling mechanisms. SIP is a mechanism defined in Request for Comment (RFC) 3261 by the Internet Engineering Task Force (IETF) for finding endpoints and routing control signals between them and is a set of simple operations, including REGISTER, INVITE, ACK, and BYE. SDP is a protocol for declaring media. In IMS networks, media transport is based on the real-time transport protocol (RTP), among others. 3GPP TS 24.229 V7.11.0, IP Multimedia Call Control Protocol Based on Session Initiation Protocol (SIP) and Session Description Protocol (SDP), Stage 3, Release 7 (March 2008) specifies an IP Multimedia Call Control Protocol based on SIP and SDP. Section 5 of TS 24.229 specifies SIP usage at a UE, and Section 6 of TS 24.229 specifies SDP usage.

For a UE to access an IMS and IPTV services, the UE registers in a serving call session control function (S-CSCF), which is an IMS core node and is in essence a SIP server. The IMS also includes a number of access nodes, including a proxy CSCF (P-CSCF), a media gateway control function (MGCF), and one or more border gateways (BGs), that mediate UE access to the core nodes and through them to media content residing on media servers. The UE may include an IP multimedia subscriber identity module (ISIM), which is an application, or computer program, residing on a universal integrated circuit card (UICC) that enables the UE to register and access the IMS. The ISIM is typically preconfigured with parameters necessary to initiate the UE's registration to the IMS, including a private user identity, one or more public user identities, and a home network domain name.

With current-standard IPTV, it is possible to pause a live broadcast and resume viewing the program using a recording stored in the network. This is known as "network time-shift".

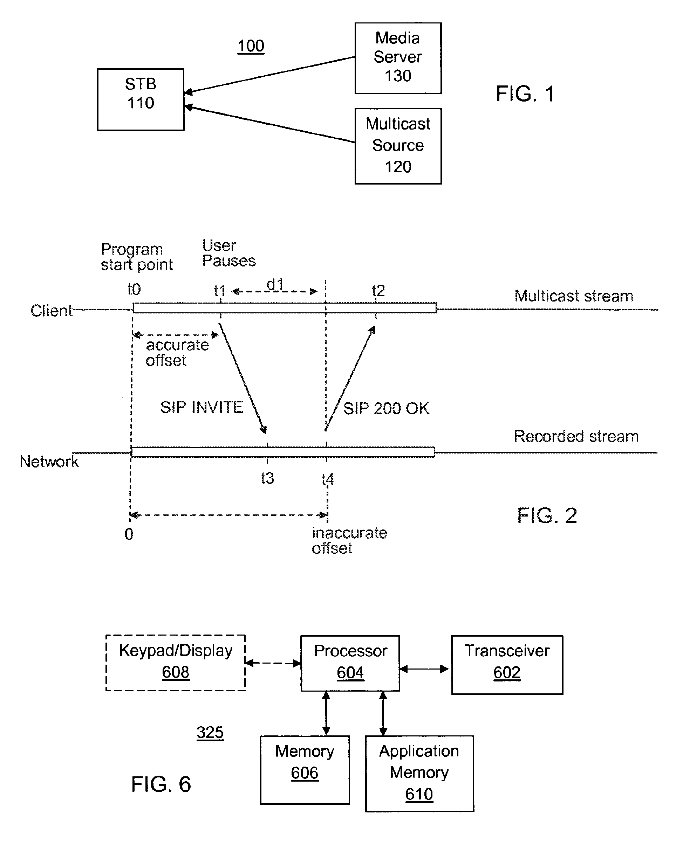

FIG. 1 is a diagram that depicts a network time-shift arrangement 100, including a STB 110 configured to receive a multicast stream of a live program from a Multicast Source 120 and a Media Server (MS) 130 that provides a unicast stream to the STB 110. The unicast stream that delivers a recording of the paused program.is set up when the user pauses the live program.

It will be noted that in order to perform a seamless transition between pause and play for the user, it is necessary to send a restart position in the recorded content from the STB 110 to the MS 130. Nevertheless, the offset currently sent from the STB 110 to the MS 130 according to the current standards has no relation to the actually desired restart time of the program.

FIG. 2 depicts in more detail the problem with a network time-shift under the current standards. As shown in FIG. 2, the multicast stream begins at a time t0 on the user, or client, side, and is paused by the user at a time t1. The difference between the times t0, t1 is accurately known on the client side. The pause at the time t1 causes a SIP INVITE message to be sent by the STB 110 to the network side, and that message arrives on the network side at a time t3 that is different from the time t1. In due course, the network side sends a SIP 200 OK message at a time t4, and that message arrives at the client side at a time t2. The SIP 200 OK message includes a program time offset of t4-t0, which is accurate from the network side's point of view, but inaccurate from the client side's point of view in that it is not t1-t0.

As depicted in FIG. 2, the difference between the network side's offset and the client side's offset is a duration d1 that is attributable to network delay in handling the pause request and that results in an incorrect offset returned to the client side. The network delay d1 can be 200 milliseconds (ms) or more. In addition, if any of the messages depicted in FIG. 2 are lost or the communication transaction is otherwise not successfully completed, there can be a retransmission, which can delay the network-side response by as much as 32 seconds (s) in the worst case.

The effect of even only a 200-ms delay is a jump in the restarted video or other media information stream that prevents a smooth transition from the multicast stream to the unicast stream when a user tries to resume a paused live broadcast.

Related art is described e.g. in Siemens AG: "Timestamp marking for Time Shift on a networked PVR", IP.Com Journal, August 2007, which describes how the network side calculates a value DELTA and returns to a user, wherein the value may be used as a personalized offset value in a streaming request, in order to enable a stream to be started at the same point of time at which the user set a time shift request.

### SUMMARY

In accordance with this invention, systems and methods include a parameter in the SIP/SDP signaling that enables a more accurate media transition between pause and play.

The invention is defined by independent claims 1, 5, 9 and 12. Further embodiments are described in the dependent claims.

In an aspect of this invention, there is provided a method of generating an offset value for time-shifting a media information stream provided to a user of an electronic communication network. The method includes generating an answer message that includes at least an identifier of the user, an identifier of the media information stream, and an indicator of a start time of the media Information stream; sending the answer message to a set-top box in the communication network; and computing, in the set-top box, the offset value based on the indicator of the start time of the media information stream.

In another aspect of this invention, there is provided an Internet Protocol Television (IPTV) server for handling time information for time-shifting a media information stream provided to a user of an electronic communication network. The IPTV server includes a transceiver configured for exchanging electronic signals with one or more entities in the communication network; and an electronic processor programmably configured to handle information carried by the electronic signals according to instructions in a memory. The processor is configured to generate an answer message that includes at least an identifier of the user, an identifier of the media information stream, and an indicator of a start time of the media information stream; and to cause the answer message to be sent to a set-top box in the communication network for computing, in the set-top box, an offset value based on the indicator of the start time of the media information stream.

### BRIEF DESCRIPTION OF THE DRAWINGS

The several features, objects, and advantages of this invention will be understood by reading this description in conjunction with the drawings, in which:
FIG. 1 depicts a communication network for network time-shift;
FIG. 2 depicts network delay in a communication network after a network time-shift request;
FIG. 3 depicts a communication network and a signal flow among communication network entities for network time-shift;
FIGs. 4A, 4B depict examples of messages according to the session initiation protocol;
FIG. 5 is a block diagram of a user equipment such as a set-top box for the communication network; and
FIG. 6 is a block diagram of an IPTV Application Platform for the communication network.

### DETAILED DESCRIPTION

Among other things, the inventors have recognized that it is necessary to provide information that enables accurate computation of the time offset t1-t0 in FIG. 2. In accordance with this invention, systems and methods include a parameter in the SIP signaling that enables a more accurate computation, and so a smoother media transition from pause to play.

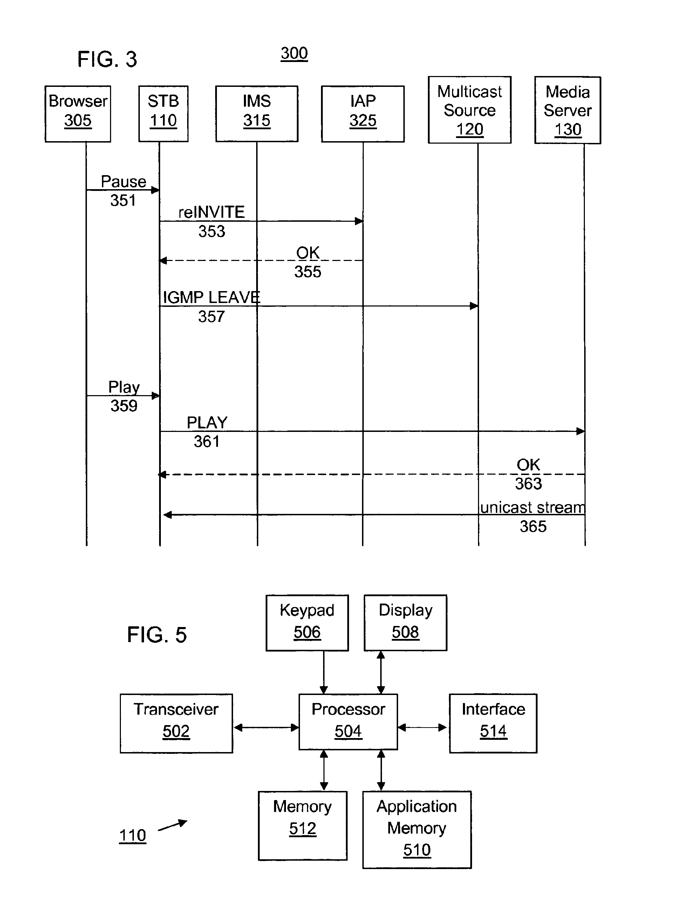

FIG. 3 depicts a communication network 300 and a signal flow among communication network entities for an improved network time-shift in accordance with this invention. FIG. 3 shows the signal flow that takes place in a transition from multicast transmission to unicast transmission in connection with a network time-shift. As depicted, the network 300 includes a browser 305 and the STB 110 on the user, or client side, and an IMS 315, an IPTV Application Platform (IAP) 325, and the Multicast Source 120 and Media Server 130 on the network side. It will be appreciated that the IAP 325 acts in general as a control server on the network side and that messaging protocols other than those described below can be used.

With a broadcast media stream from the Multicast Source 120 already set up in any suitable way, the user pauses the stream by clicking on a suitable link presented by the browser 305, which sends a Pause message (step 351) to the STB 110. In response, the STB 110 sends (step 353) a SIP reINVITE message to the IAP 325, which includes SDP relevant information for restarting the media stream as a unicast stream on another channel. It will be appreciated that when in a session, a SIP reINVITE message would typically be used, although a "dummy" INVITE message, i.e., an empty INVITE message, could be used instead. According to the protocols, the IAP 325 replies (step 355) with a SIP 200 OK message that includes a time offset in the program of the pause, and the STB 110 sends (step 357) an Internet Group Management Protocol (IGMP) LEAVE message to the Multicast Source 120, which includes other-channel information for re-starting the paused stream. IGMP is used by IP hosts to manage IP multicast groups and by connected routers to discover group members for streaming video and other content. IGMP version 1 is defined by RFC 1112, IGMP version 2 is defined by RFC 2236, and IGMP version 3 is defined by RFC 3376.

The user can begin receiving the paused media stream by clicking on a suitable link presented by the browser 305, which sends a Play message (step 359) to the STB 110. In response, the STB 110 sends (step 361) a Real-Time Streaming Protocol (RTSP) PLAY message to the Media Server 130 that includes suitable information needed for restarting the paused and recorded multicast stream as a unicast stream. Such information can include a URI indicating the desired stream, a session identification (ID), and the offset value that indicates when the pause occurred. According to the protocols, the Media Server 130 sends (step 363) an RTSP 200 OK message to the STB 110, and the unicast stream of the paused recorded program is provided (step 365).

The inventors have recognized that the delay d1 shown in FIG. 2 arises from conventionally generating and handling the SIP INVITE message (step 353 in FIG. 3) and the SIP 200 OK message (step 355 in FIG. 3). The effects of the delay d1 can be eliminated in either of two alternative ways: 1. by the network side's providing the time t0 to the client side, which uses the time t0 to compute the correct offset t1-t0; or 2. by the client side's providing the time t1 to the network side, which uses the time t1 to compute the correct offset t1-t0 and provides the offset to the client side. The necessary information can be carried between the client and network sides by SDP messages as described below.

According to RFC 3264, an SDP offer message in the SDP offer/answer procedure includes a "t=" field that conveys the time of a session, and according to RFC 2327, the "t=" field has a format t=<start time><stop time> that specifies start and stop times for the session. In general, streams for unicast sessions are created and destroyed through external signaling, such as SIP signaling, and in that case, the "t=" field in the SDP offer message should have a value of "0 0".

Multiple "t=" fields may be used in an SDP offer message if a session is active at multiple irregularly spaced times, and each additional "t=" field specifies an additional period of time for which the session will be active. If the session is active at regular times, an "r=" field should be used in addition to and following a "t=" field, in which case the "t=" field specifies the start and stop times of the repeat sequence. If a stop-time is set to zero, then the session is not bounded, but the session will not be active until after the start-time. If the start-time is also zero, the session is regarded as permanent.

For the network side to provide the actual time t0 of the beginning of the program to the client side, the IAP 325 can include the start time t0 in the SDP answer in the SIP 200 OK message (step 355 in FIG. 3). This requires a new field in an SDP answer message. For example, a new h-start field can be introduced in the SDP iptv_rtsp message to provide the start time of the program. The syntax of such an h-start field can be as follows: a=fmtp:iptv_rtsp h-start=<start-time>. The STB 110 can then use the <start-time> value in the h-start field by subtracting it from the time t1, which it already knows, in order to calculate an accurate offset. With a <start-time> value substantially equal to the time t0, the STB can compute the offset according to offset = t1-t0. It will be understood that other field names can be used.

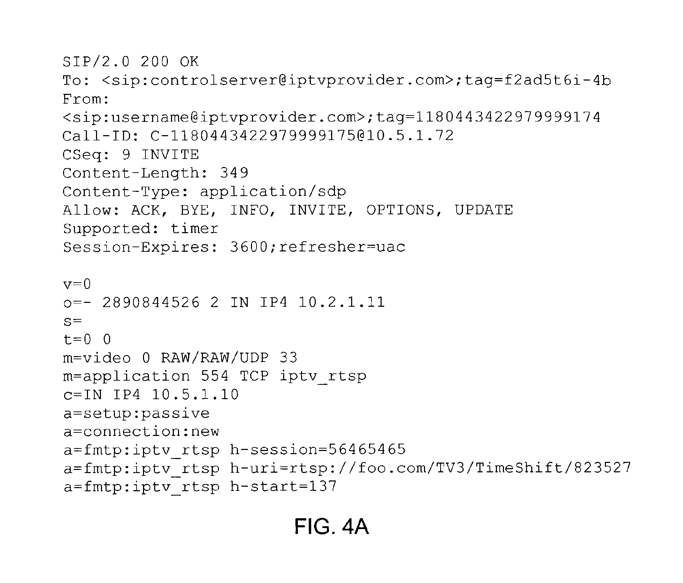

FIG. 4A depicts an example of a SIP 200 OK message that includes a session identifier ("h-session=...", the URI of the program ("h-uri=..."), and the start time offset ("h-start=..."). It can be noted that the user, who in FIG. 4A is identified by the information element sip:username@iptvprovider.com, is known to the IAP 325 (controlserver@iptvprovider.com) from a previous identification and authentication procedure, during which the user registered with the network.

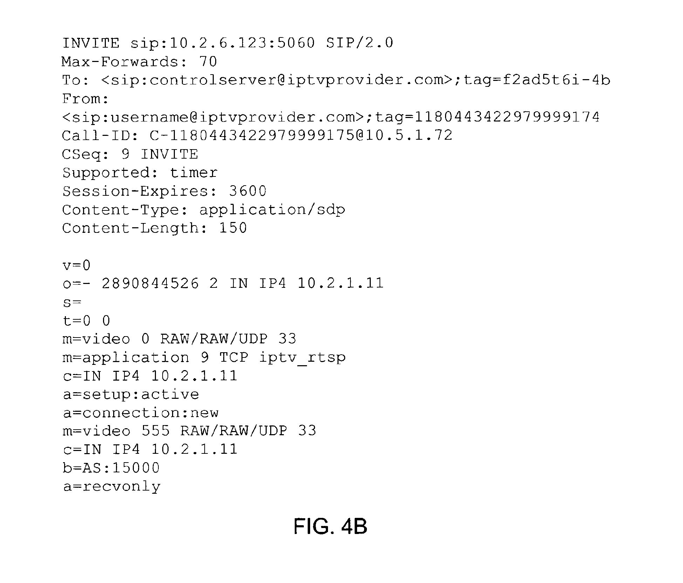

For the client side to provide the actual time t1 of the pause to the network side, the STB 110 can include the pause time t1 in the "t=" field of the SDP offer message in the SIP reINVITE message (step 353 in FIG. 3). FIG. 4B depicts an example of a reINVITE message that includes a "t=" field, with values t0=0 and t1=0, and other information corresponding to FIG. 4A. The IAP 325 can then use the t1 value in the "t=" field by subtracting from it the start time t0, which it already knows, in order to calculate an accurate offset = t1-t0. The IAP 325 can provide the accurate offset to the client side by including it in the h-start field in the SDP answer message in the SIP 200 OK message (step 355 in FIG. 3, and FIG. 4A).

It is currently believed to be simpler for the client side to provide the time t1 in the "t=" field of the SDP offer at least because it avoids introducing a new field into the standard. Of the two values in the standard "t=" field, the start time and stop time, the stop time is not known and would have a value of 0, and the start time would reflect the start time of the pause, i.e., the time t1. Modification of the "t=" field in accordance with this invention is permitted by the SDP-related specifications, e.g., RFC 2327 and RFC 3264.

Embodiments of this invention have a number of advantages over prior systems and methods, including, for example, a smooth transition between a paused live broadcast and a network recorded content. Reusing existing parameters in the standard avoids the need to introduce a new parameter. By sending a STB-generated time indicator, or timestamp, the network side can calculate a more accurate offset.

The artisan will understand that the methods and apparatus described in this application can be implemented in many types of electronic communication networks, such as mobile radio networks.

FIG. 5 is a block diagram of a typical UE 500, such as a mobile phone, STB 110, computer, etc., for accessing and time-shifting media information streams as described in this application.

The UE 500 includes a transceiver 502 that is suitable for exchanging electronic signals with one or more of the network entities depicted in FIGs. 1 and 3. Information carried by those signals is handled by a processor 504, which can include one or more sub-processors, and which executes one or more software modules and applications, including for example the browser application 305 and an IPTV terminal function (ITF), to carry out the operations of the STB 110 described above. User input to the UE 500 is provided through a keypad, remote control, or other device 506, and information presented to the user is provided to a display 508. If the display has touch-screen capabilities, user input can be provided through the display. Software applications can be stored in a suitable application memory 510, and the UE can also download and/or cache desired information in a suitable memory 512. The UE 500 can also include an interface 514 that can be used to connect other components, such as a computer, microphone, etc., to the UE 500. Based on its programming, the processor 504 forms the appropriate request and answer messages described above, sends them to the network 100, 300 via transceiver 502, and acts on messages and information received from the network. Such activity can include the offset calculations described above.

FIG. 6 is a block diagram of a typical IAP 325 for providing media information streams and time-shifting information as described in this application.

The IAP 325 includes a transceiver 602 that is suitable for exchanging electronic signals with one or more of the network entities depicted in FIGs. 1 and 3. Information carried by those signals is handled by a processor 604, which can include one or more sub-processors, and which executes one or more software modules and applications to carry out the operations of the IAP 325 described above. In particular, the processor 604 in cooperation with a suitable memory 606 generates and interprets the "t=" field in SDP messages to convey time indicators and calculate time offsets as described above. For example, the processor 604 is suitably configured to use a pause time t1 provided by the client side (UE 500) in a SIP INVITE message to compute an accurate time offset t1-t0, and to include a start time t0 in a SIP 200 OK message to enable the client side to compute an accurate time offset. It will be understood that a typical IAP 325 is a database server in the network and so a keypad/display 608 is usually not needed for user input/output, although such interfaces can be provided, e.g., for administrative functions. Software applications executed by the processor 604 can be stored in a suitable application memory 610.

The invention described here can be considered to be embodied entirely within any form of computer-readable storage medium having stored therein an appropriate set of instructions for use by or in connection with an instruction-execution system, apparatus, or device, such as a computer-based system, processor-containing system, or other system that can fetch instructions from a medium and execute the instructions. As used here, a "computer-readable medium" can be any means that can contain, store, or transport the program for use by or in connection with the instruction-execution system, apparatus, or device. The computer-readable medium can be, for example but not limited to, an electronic, magnetic, optical, electromagnetic, infrared, or semiconductor system, apparatus, or device. More specific examples (a non-exhaustive list) of the computer-readable medium include an electrical connection having one or more wires, a portable computer diskette, a RAM, a ROM, and an erasable programmable read-only memory (EPROM or Flash memory).

It is expected that this invention can be implemented in a wide variety of environments, including for example mobile communication devices. It will also be appreciated that procedures described above are carried out repetitively as necessary. To facilitate understanding, aspects of the invention are described in terms of sequences of actions that can be performed by, for example, elements of a programmable computer system. It will be recognized that various actions can be performed by specialized circuits (e.g., discrete logic gates interconnected to perform a specialized function or application-specific integrated circuits), by program instructions executed by one or more processors, or by a combination of both.

Thus, the invention may be embodied in many different forms, not all of which are described above, and all such forms are contemplated to be within the scope of the invention. For each of the various aspects of the invention, any such form may be referred to as "logic configured to" perform a described action, or alternatively as "logic that" performs a described action. It is emphasized that the terms "comprises" and "comprising", when used in this application, specify the presence of stated features, integers, steps, or components and do not preclude the presence or addition of one or more other features, integers, steps, components, or groups thereof.

The particular embodiments described above are merely illustrative and should not be considered restrictive in any way.

## Claims

1. A method of generating an offset value for time-shifting a media information stream provided to a user (110; 305) of an electronic communication network (300), comprising:
(a) generating, in a Internet Protocol Television Server (325), an answer message that includes at least an identifier of the user, an identifier of the media Information stream, and an Indicator of a start time of the media stream;
(b) sending (355) the answer message to a set-top box in the communication network; and
(c) computing, in the set-top box, the offset value based on the indicator of the start time of the media information stream.

2. The method of claim 1, wherein the answer message is a Session Description Protocol, SDP message that is included in a Session Initiation Protocol, SIP 200 OK message.

3. The method of claim 1, further comprising (d) restarting (357; 359, 361) the media information stream at a point corresponding to the offset value.

4. The method of claim 1, wherein the offset value is a time displacement from a start of the media stream to a time of generating a pause request by the set-top box.

5. A method in a user equipment of generating an offset value for time-shifting a media information stream provided to a user of an electronic communication network, the method comprising:
(a) receiving an answer message generated by an Internet Protocol Television Server (325), the message including at least an identifier of the user, an Identifier of the media information stream, and an indicator of a start time of the media information stream;
(b) computing, In the user equipment, the offset value based on the indicator of the start time of the media information stream.

6. The method of claim 5, wherein the offset value is a time displacement from a start of the media information stream to a time of generating a pause request by the user equipment.

7. The method according to any of the claims 5 - 6, wherein the user equipment is a set-top box.

8. The method according to any of the claims 5 - 7, wherein the answer message is a Session Description Protocol, SDP message that is included in a Session Initiation Protocol, SIP 200 OK message.

9. An Internet Protocol Television, IPTV server (325) for handling time information for time-shifting a media information stream provided to a user (110; 305) of an electronic communication network (300), comprising:
a transceiver (602) configured for exchanging electronic signals with one or more entities In the communication network; and
an electronic processor (604) programmably configured to handle information carried by the electronic signals according to instructions in a memory (606; 610);
the processor being configured to generate an answer message that includes at least an identifier of the user, an identifier of the media information stream, and an indicator of a start time of the media information stream; and to cause the answer message to be sent to a set-top box (110) in the communication network for computing, in the set-top box, an offset value based on the indicator of the start time of the media information stream.

10. The IPTV server of claim 9, wherein the answer message is a Session Description Protocol, SDP message that is Included in a Session Initiation Protocol, SIP 200 OK message.

11. The IPTV server of claim 10, wherein the indicator of the start time is such that the offset value corresponds to a pause point in the media information stream requested by the user.

12. A user equipment (110; 305) for an electronic communication network (300) for handling time information for time-shifting a media information stream provided to the user equipment, comprising:
a transceiver (502) configured to exchange electronic signals with one or more entities in the network; and
an electronic processor (504) programmably configured to handle information carried by the electronic signals according to instructions in a memory (510; 512);
the processor being configured to receive an answer message generated by an Internet protocol television server (325) in the communication network, the message including at least an identifier of the user, an identifier of the media stream, and an indicator of a start time of the media information stream; and to compute an offset value based on the received indicator of the start time.

13. The user equipment of claim 12, wherein the request message is a Session Description Protocol, SDP message that is included in a Session Initiation Protocol, SIP INVITE message.

14. The user equipment of claim 12 or 13, wherein the offset value is a time displacement from a start of the media information stream to a pause point requested by the user equipment.

15. The user equipment of any of the claims 13 - 14, the user equipment being a set-top box.

## Patentansprüche

1. Verfahren zur Erzeugung eines Offsetwerts zum zeitlichen Verschieben eines Medieninformationsstroms, der für einen Benutzer (110; 305) eines elektronischen Kommunikationsnetzes (300) bereitgestellt wird, umfassend:
(a) Erzeugen in einem Internetprotokoll-Fernsehserver (325) einer Antwortnachricht, die mindestens eine Kennung des Benutzers, eine Kennung des Medieninformationsstroms und einen Indikator einer Startzeit des Medieninformationsstroms umfasst;
(b) Senden (355) der Antwortnachricht an einen Digitalempfänger im Kommunikationsnetz; und
(c) Berechnen im Digitalempfänger des Offsetwerts basierend auf dem Indikator der Startzeit des Medieninformationsstroms.

2. Verfahren nach Anspruch 1, wobei die Antwortnachricht eine Sitzungsbeschreibungsprotokoll, SDP,-Nachricht ist, die in einer Sitzungseinleitungsprotokoll, SIP,-200-OK-Nachricht enthalten ist.

3. Verfahren nach Anspruch 1, ferner umfassend (d) ein Neustarten (357; 359, 361) des Medieninformationsstroms an einer Stelle, die dem Offsetwert entspricht.

4. Verfahren nach Anspruch 1, wobei der Offsetwert eine zeitliche Versetzung von einem Start des Medieninformationsstroms zu einer Zeit des Erzeugens einer Pausenanforderung durch den Digitalempfänger ist.

5. Verfahren in einer Benutzereinrichtung zur Erzeugung eines Offsetwerts zum zeitlichen Verschieben eines Medieninformationsstroms, der für einen Benutzer eines elektronischen Kommunikationsnetzes bereitgestellt wird, wobei das Verfahren umfasst:
(a) Empfangen einer von einem Internetprotokoll-Fernsehserver (325) erzeugten Antwortnachricht, wobei die Nachricht mindestens eine Kennung des Benutzers, eine Kennung des Medieninformationsstroms und einen Indikator einer Startzeit des Medieninformationsstroms umfasst;
(b) Berechnen in der Benutzereinrichtung des Offsetwerts basierend auf dem Indikator der Startzeit des Medieninformationsstroms.

6. Verfahren nach Anspruch 5, wobei der Offsetwert eine zeitliche Versetzung von einem Start des Medieninformationsstroms zu einer Zeit des Erzeugens einer Pausenanforderung durch die Benutzereinrichtung ist.

7. Verfahren nach einem der Ansprüche 5 bis 6, wobei die Benutzereinrichtung ein Digitalempfänger ist.

8. Verfahren nach einem der Ansprüche 5 bis 7, wobei die Antwortnachricht eine Sitzungsbeschreibungsprotokoll, SDP,-Nachricht ist, die in einer Sitzungseinleitungsprotokoll, SIP,-200-OK-Nachricht enthalten ist.

9. Internetprotokoll-Fernseh, IPTV,-Server (325) zum Verarbeiten von Zeitinformationen zum zeitlichen Verschieben eines Medieninformationsstroms, der für einen Benutzer (110; 305) eines elektronischen Kommunikationsnetzes (300) bereitgestellt wird, umfassend:
einen Sendeempfänger (602), der zum Austauschen von elektronischen Signalen mit einer oder mehreren Instanzen im Kommunikationsnetz konfiguriert ist; und
einen elektronischen Prozessor (604), der programmierbar konfiguriert ist, um Informationen, die durch die elektronischen Signale übertragen werden, gemäß Befehlen in einem Speicher (606; 610) zu verarbeiten;
wobei der Prozessor so konfiguriert ist, dass er eine Antwortnachricht erzeugt, die mindestens eine Kennung des Benutzers, eine Kennung des Medieninformationsstroms und einen Indikator einer Startzeit des Medieninformationsstroms umfasst; und bewirkt, dass die Antwortnachricht zum Berechnen in einem Digitalempfänger eines Offsetwertwerts basierend auf dem Indikator der Startzeit des Medieninformationsstroms an den Digitalempfänger (110) im Kommunikationsnetz gesendet wird.

10. IPTV-Server nach Anspruch 9, wobei die Antwortnachricht eine Sitzungsbeschreibungsprotokoll, SDP,-Nachricht ist, die in einer Sitzungseinleitungsprotokoll, SIP,-200-OK-Nachricht enthalten ist.

11. IPTV-Server nach Anspruch 10, wobei der Indikator der Startzeit derart ist, dass der Offsetwert einer vom Benutzer angeforderten Pausenstelle im Medieninformationsstrom entspricht.

12. Benutzereinrichtung (110; 305) für ein elektronisches Kommunikationsnetz (300) zum Verarbeiten von Zeitinformationen zum zeitlichen Verschieben eines Medieninformationsstroms, der für die Benutzereinrichtung bereitgestellt wird, umfassend:
einen Sendeempfänger (502), der zum Austauschen von elektronischen Signalen mit einer oder mehreren Instanzen im Netz konfiguriert ist; und
einen elektronischen Prozessor (504), der programmierbar konfiguriert ist, um Informationen, die durch die elektronischen Signale übertragen werden, gemäß Befehlen in einem Speicher (510; 512) zu verarbeiten;
wobei der Prozessor so konfiguriert ist, dass er eine von einem Internetprotokoll-Fernsehserver (325) im Kommunikationsnetz erzeugte Antwortnachricht empfängt, wobei die Nachricht mindestens eine Kennung des Benutzers, eine Kennung des Medieninformationsstroms und einen Indikator einer Startzeit des Medieninformationsstroms umfasst, und einen Offsetwert basierend auf dem empfangenen Indikator der Startzeit berechnet.

13. Benutzereinrichtung nach Anspruch 12, wobei die Anforderungsnachricht eine Sitzungsbeschreibungsprotokoll, SDP,-Nachricht ist, die in einer Sitzungseinleitungsprotokoll, SIP,-INVITE-Nachricht enthalten ist.

14. Benutzereinrichtung nach Anspruch 12 oder 13, wobei der Offsetwert eine zeitliche Versetzung von einem Start des Medieninformationsstroms zu einer von der Benutzereinrichtung angeforderten Pausenstelle ist.

15. Benutzereinrichtung nach einem der Ansprüche 13 bis 14, wobei die Benutzereinrichtung ein Digitalempfänger ist.

## Revendications

1. Procédé de génération d'une valeur de décalage en vue d'un visionnage différé d'un flux d'informations média fourni à un utilisateur (110 ; 305) d'un réseau de communication électronique (300), comprenant de :
(a) générer, dans un serveur de télévision à protocole Internet (325), un message de réponse qui inclut au moins un identifiant de l'utilisateur, un identifiant du flux d'information média et un indicateur d'un temps de démarrage du flux d'informations média ;
(b) envoyer (355) le message de réponse à un terminal numérique dans le réseau de communication ; et
(c) calculer informatiquement, dans le terminal numérique, la valeur de décalage sur la base de l'indicateur du temps de démarrage du flux d'informations média.

2. Procédé selon la revendication 1, dans lequel le message de réponse est un message de protocole de description de session, SDP, qui est inclus dans un message OK 200 de protocole d'amorce de session, SIP.

3. Procédé selon la revendication 1, comprenant en outre de (d) redémarrer (357 ; 359, 361) le flux d'informations média à un point correspondant à la valeur de décalage.

4. Procédé selon la revendication 1, dans lequel la valeur de décalage est un déplacement temporel à partir d'un début du flux d'informations média jusqu'à un temps de génération d'une demande de pause par le terminal numérique.

5. Procédé dans un équipement d'utilisateur de génération d'une valeur de décalage en vue d'un visionnage différé d'un flux d'informations média fourni à un utilisateur d'un réseau de communication électronique, le procédé comprenant de :
(a) recevoir un message de réponse généré par un serveur de télévision à protocole Internet (325), le message incluant au moins un identifiant de l'utilisateur, un identifiant du flux d'information média et un indicateur d'un temps de démarrage du flux d'informations média ;
(b) calculer informatiquement, dans l'équipement d'utilisateur, la valeur de décalage sur la base de l'indicateur du temps de démarrage du flux d'informations média.

6. Procédé selon la revendication 5, dans lequel la valeur de décalage est un déplacement temporel à partir d'un début du flux d'informations média jusqu'à un temps de génération d'une demande de pause par le terminal numérique.

7. Procédé selon une quelconque des revendications 5 - 6, dans lequel l'équipement d'utilisateur est un terminal numérique.

8. Procédé selon une quelconque des revendications 5 - 7, dans lequel le message de réponse est un message de protocole de description de session, SDP, qui est inclus dans un message OK 200 de protocole d'amorce de session, SIP.

9. Serveur de télévision à protocole Internet, IPTV, (325) pour gérer une information temporelle en vue d'un visionnage différé d'un flux d'informations média fourni à un utilisateur (110 ; 305) d'un réseau de communication électronique (300), comprenant :
un émetteur/récepteur (602) configuré pour échanger des signaux électroniques avec une ou plusieurs entités dans le réseau de communication ; et
un processeur électronique (604) configuré de manière programmable pour gérer une informations transportée par les signaux électroniques conformément aux instructions dans une mémoire (606, 610) ;
le processeur étant configuré afin de générer un message de réponse qui inclut au moins un identifiant de l'utilisateur, un identifiant du flux d'information média et un indicateur d'un temps de démarrage du flux d'informations média ; et amener le message de réponse à être envoyé à un terminal numérique (110) dans le réseau de communication à des fins de calcul informatique, dans le terminal numérique, d'une valeur de décalage sur la base de l'indicateur du temps de démarrage du flux d'informations média.

10. Serveur IPTV selon la revendication 9, dans lequel le message de réponse est un message de protocole de description de session, SDP, qui est incluse dans un message OK 200 de protocole d'amorce de session, SIP.

11. Serveur IPTV selon la revendication 10, dans lequel l'indicateur du temps de démarrage est tel que la valeur de démarrage correspond à un point de pause dans le flux d'informations média demandé par l'utilisateur.

12. Equipement d'utilisateur (110 ; 305) pour un réseau de communication électronique (300) pour gérer l'information temporelle en vue d'un visionnage différé dans un flux d'informations média fourni à l'équipement d'utilisateur :
un émetteur/récepteur (502) configuré pour échanger des signaux électroniques avec une ou plusieurs entités dans le réseau ; et
un processeur électronique (504) configuré de manière programmable pour gérer une information transportée par les signaux électroniques conformément aux instructions dans une mémoire (510 ; 512) ;
le processeur étant configuré afin de recevoir un message de réponse généré par un serveur de télévision à protocole Internet (325) dans le réseau de communication, le message incluant au moins un identifiant de l'utilisateur, un identifiant du flux d'informations média et un indicateur d'un temps de démarrage du flux d'informations média ; et calculer informatiquement une valeur de décalage sur la base de l'indicateur reçu du temps de démarrage.

13. Equipement d'utilisateur selon la revendication 12, dans lequel le message de demande est un message de protocole de description de session, SDP, qui est inclus dans un message INVOTE de protocole d'amorce de session, SIP.

14. Equipement d'utilisateur selon la revendication 12 ou 13, dans lequel la valeur de décalage est un déplacement temporel à partir d'un début du flux d'informations média jusqu'à un point de pause demandée par l'équipement d'utilisateur.

15. Equipement d'utilisateur selon une quelconque des revendications 13 - 14, l'équipement d'utilisateur étant un terminal numérique.
